# FASCICULE DE BREVET EUROPEEN

(11) **EP 0 665 404 B1**
(45) Date de publication et mention de la délivrance du brevet: **05.11.2003**
(21) Numéro de dépôt: 95400167.3
(22) Date de dépôt: 26.01.1995
(51) Int. Cl.: F16L 55/033

(54) **Tube cylindrique flexible pour le transport de gaz**
Schlauch zum Gastransport
A gas transport hose

(30) Priorité: 28.01.1994 BR 7400072 U
(43) Date de publication de la demande: 02.08.1995
(73) Titulaire: WECOSTA, 59100 Roubaix (FR)
(72) Inventeur: Lepoutre, Edmond Pol Jean, Curitiba, Parana (BR)
(74) Mandataire: Eidelsberg, Victor Albert

(56) Documents cités:
- EP-A- 0 318 232
- WO-A-89/12733
- CH-A- 538 748
- DE-A- 2 341 055
- DE-U- 9 015 414
- US-A- 2 089 492

## Description

L'invention concerne les tubes cylindriques flexibles destinés au transport d'air ou autres gaz, utilisés notamment dans l'industrie automobile où leur but est, entre autres, d'amener l'air vers les moteurs à explosion, en évitant la propagation excessive de bruits d'origine mécanique, aspect qui s'ajoute à la résistance à la chaleur et aux vibrations, à une durée de vie plus longue et à un faible coût de production.

Il existe actuellement des tubes flexibles utilisés par différentes industries, parmi lesquelles l'industrie automobile. Ces tubes sont fabriqués à partir de fils tressés ou tissés sur des supports en fils métalliques ou non. Il faut noter que ces tubes flexibles, de par leur constitution, évitent la propagation excessive des bruits d'origine mécanique. Toutefois, le procédé de fabrication de ces tubes flexibles est relativement lent et par conséquent d'un coût élevé. Il oblige le fabricant à faire subir de nombreux traitements au produit pour obtenir la construction souhaitée, en ce qui concerne le format et l'étanchéité nécessaire de chaque tube flexible.

Il existe également dans la technique des tubes flexibles fabriqués à partir de superpositions hélicoïdales de rubans ou bandes uniformes, ondulés ou non, de différents matériaux qui peuvent être collés ou thermocollés entre eux. Il faut noter que ces rubans uniformes sont confectionnés en aluminium, en plastique, en papier et/ou en fibres de verre, et que le procédé de fabrication de ces tubes flexibles est rapide. Les superpositions des rubans uniformes donnent au tube flexible de bonnes propriétés de résistance et d'étanchéité. Toutefois, ce type de tube a tendance à propager de façon excessive les bruits d'origine mécanique.

Il faut ajouter également que le procédé de fabrication par superposition de différentes couches de rubans uniformes, ondulés ou non, enroulés sur eux-mêmes de façon hélicoïdale, confère au tube une certaine consistance et une résistance aux vibrations. Toutefois, les superpositions décrites ne permettent pas l'utilisation de matériaux de rubans mous non transmetteurs de bruit, sans support uniforme.

Les perfectionnements apportés par la présente invention ont été projetés et conçus pour éliminer les inconvénients mentionnés ci-dessus. On a développé un tube cylindrique flexible destiné au transport de l'air ou autres gaz, utilisé notamment dans l'industrie automobile, où son but est, entre autres, d'amener l'air vers les moteurs à explosion, et comprenant au moins un revêtement cylindrique flexible, confectionné en un matériau considéré comme mou et absorbant les bruits, et un ruban-support pourvu d'ajours, contre lequel est placé ledit revêtement. Le ruban-support ajouré, par exemple en métal (acier, aluminium, etc..), donne au tube consistance radiale et flexibilité, en évitant la propagation excessive de bruits par le développement des caractéristiques acoustiques. Cela est dû aux ajours du ruban-support.

On connaît déjà du document DE-A-2341055 un tube souple comportant au moins un revêtement cylindrique souple, en un matériau mou et absorbant les bruits, et un ruban support pourvu d'ajours contre lequel le revêtement est placé.

Le revêtement peut être un tissu de toute nature, du feutre, du papier ou tout autre matériau absorbant les bruits, tous ces matériaux étant considérés comme des matériaux mous. Il peut également être composite, c'est-à-dire comporter au moins deux couches. Un tel revêtement peut être prévu à l'intérieur et/ou à l'extérieur du ruban-support.

Dans les trois cas ci-dessus, pendant le fonctionnement d'une machine, les bruits mécaniques que celle-ci émet sont transformés en pulsations ou ondes à l'intérieur du tube. Les ondes passent par les ajours du ruban-support et elles sont amorties, avant et/ou après, par le matériau de confection du ou des revêtements qui absorbent les bruits.

Un tube de transport d'un gaz en régime pulsé présente une fréquence de résonance qui dépend notamment de sa longueur. A cette fréquence de résonance, l'amplitude des ondes est maximale et, par conséquent, le tube est très bruyant.

L'invention vise un tube souple encore plus silencieux que ceux de l'art antérieur. Cela est atteint par les caractéristiques de la revendication 1. Les sous-revendications visant des perfectionnements avantageux.

La présence du ou des revêtements mous permet, éventuellement avec passage partiel du gaz à travers le ou les revêtements, selon le différentiel de pressions entre le tube et l'extérieur et selon les applications envisagées, d'atténuer les ventres de pression qui sont générateurs du bruit.

Le ruban-support est par exemple constitué par une bande perforée, une bande grillagée, une tresse ou un treillis.

On comprendra mieux l'invention à l'aide du complément de description qui va suivre et en référence aux dessins annexés dans lesquels :
Fig. 1. est une vue en perspective, avec arrachements, d'un tube cylindrique flexible, selon un premier mode de réalisation de l'invention, constitué d'un ruban-support perforé, placé entre un revêtement extérieur et un revêtement intérieur ayant un diamètre inférieur, tous deux cylindriques et flexibles ;
Fig. 2. est une vue schématique et en coupe transversale du tube représenté à la Fig. 1 ;
Figs. 3 et 4 sont des vues analogues respectivement aux Figs 1 et 2, relativement à un deuxième mode de réalisation de l'invention ; et
Fig. 5 est une vue analogue à la Fig. 2, relativement à un troisième mode de réalisation de l'invention.

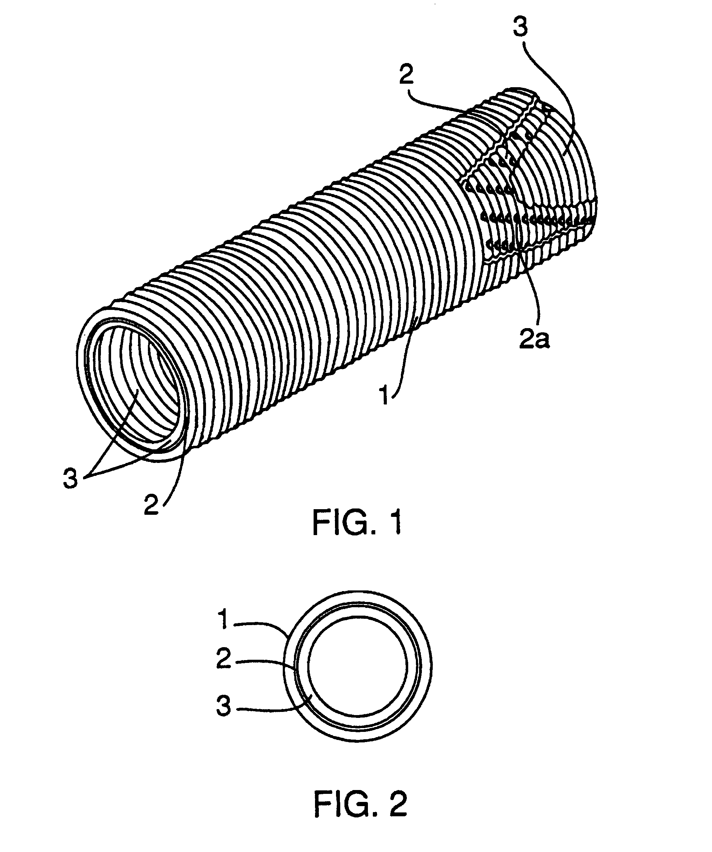

Ainsi que le montrent les Figs. 1 à 5, et conformément à ce qui a été expliqué, le tube selon l'invention comporte un ruban-support 2, hélicoïdal et ondulé, confectionné en métal ou en tout autre matériau facile à façonner, pourvu d'ajours 2A assurant le passage des ondes sonores, et au moins un revêtement 1,3 en un matériau mou absorbant les vibrations, et donc les bruits.

Ce matériau mou est par exemple un tissu de toute nature appropriée, du papier ou du feutre, éventuellement revêtu d'une couche extérieure, par exemple en bitume collé.

Quant aux ajours 2A, leur nature dépend de la structure du ruban-support 2. Ils sont fonctionnellement définis comme étant des passages physiques à travers la paroi du ruban-support permettant la libre traversée radiale de ce dernier par les ondes sonores véhiculées dans le tube. Par exemple, dans le cas d'une bande métallique perforée, ces ajours sont des perforations. Au surplus, ces ajours forment des discontinuités axiales dans le matériau du ruban-support, ces discontinuités s'opposant à la propagation axiale des sons dans le matériau lui-même du ruban-support.

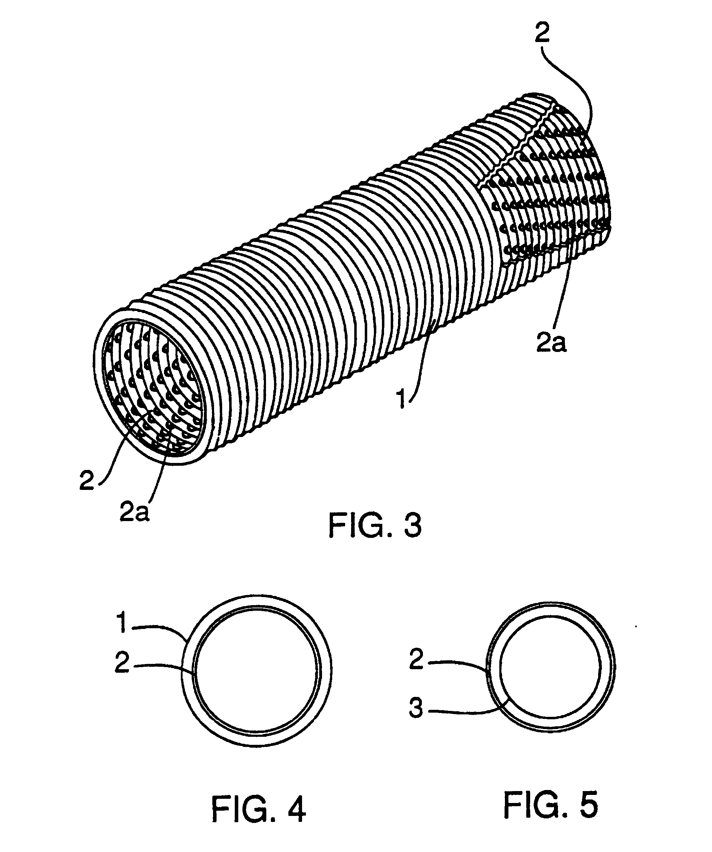

Le tube cylindrique flexible présenté sur les Figs. 1 et 2 est formé d'un ruban-support 2 central, sur lequel sont placés par superposition, hélicoïdale ou non, et par collage ou non, deux revêtements flexibles, l'un extérieur 1 de diamètre supérieur à celui du ruban-support et l'autre intérieur 3 de diamètre inférieur, confectionnés en n'importe quel type approprié de tissu ou de matériau absorbant les bruits, considéré comme un matériau mou, conformément à ce qui a été précédemment décrit.

Par conséquent, les ondes sonores, qui ont pénétré dans le tube cylindrique flexible, sont initialement amorties et filtrées par le matériau mou du revêtement intérieur 3 qui absorbe les bruits. Elles passent ensuite par les orifices 2A du ruban-support 2 et elles sont finalement amorties par le matériau mou du revêtement extérieur 1 qui absorbe les bruits.

Comme montré dans le mode de réalisation des Figs 3 et 4, le tube peut comporter le ruban-support 2 défini précédemment et, par superposition, hélicoïdale ou non, et par collage ou non, seulement le revêtement extérieur 1 ci-dessus. Dans ce tube, les ondes sonores sont initialement absorbées par les ajours 2A du ruban-support 2 pour ensuite être amorties par le matériau mou absorbant les bruits du revêtement extérieur 1.

Comme montré dans le mode de réalisation de la Fig. 5, le tube peut comporter le ruban-support 2 défini précédemment et, par superposition hélicoïdale ou non, et par collage ou non, seulement le revêtement intérieur 3. Le tube cylindrique flexible sera donc constitué d'un ruban-support 2 extérieur, avec ses ajours 2A, et d'un revêtement intérieur 3, d'un diamètre inférieur, cylindrique et flexible. Dans ce tube, les ondes sonores sont initialement amorties et filtrées par le matériau mou absorbant les bruits du revêtement intérieur 3. Ensuite, ce qui reste des ondes passe par les ajours 2A du ruban-support 2.

L'invention fournit donc un tube cylindrique flexible qui évite la propagation excessive des bruits d'origine mécanique en raison de conditions acoustiques améliorées, en collaborant de la sorte à la diminution sensible des indices sonores, notamment dans les grands centres urbains ou industriels.

## Revendications

1. Tube cylindrique flexible destiné au transport de l'air ou d'autres gaz, utilisé notamment dans l'industrie automobile, et consistant en au moins un revêtement (1, 3) cylindrique flexible, en un matériau considéré comme mou et absorbant les bruits ; et un ruban-support (2) pourvu d'ajours (2A), contre lequel le revêtement (1, 3) est placé, **caractérisé en ce que** tous les revêtements (1, 3) sont en un matériau perméable aux gaz de manière à permettre le passage du gaz entre le tube et l'extérieur.

2. Tube selon la revendication 1, **caractérisé en ce qu'**il existe un seul revêtement (1), constituant un revêtement extérieur de diamètre supérieur à celui du ruban-support (2).

3. Tube selon la revendication 1, **caractérisé en ce qu'**il existe un seul revêtement (3) constituant un revêtement intérieur de diamètre inférieur à celui du ruban-support (2).

4. Tube selon la revendication 1, **caractérisé en ce qu'**il existe un revêtement extérieur (1) de diamètre supérieur à celui du ruban-support, et un revêtement intérieur (3) de diamètre inférieur à celui du ruban-support (2).

5. Tube selon l'une des revendications 1 à 4, **caractérisé en ce que** le ruban-support (2) et/ou le revêtement (1, 3) sont obtenus par enroulement hélicoïdal.

6. Tube selon l'une des revendications 1 à 5, **caractérisé en ce que** le ruban-support (2) et le revêtement (1, 3) sont collés entre eux.

7. Tube selon l'une des revendications 1 à 6, **caractérisé en ce que** le revêtement (1, 3) est en un matériau appartenant au groupe constitué par du tissu, du feutre et du papier.

8. Tube selon l'une des revendications 1 à 7, **caractérisé en ce que** le ruban-support (2) et/ou le revêtement (1, 3) sont ondulés.

9. Tube selon l'une des revendications 1 à 8, **caractérisé en ce que** le ruban-support (2) est en un matériau facile à travailler.

10. Tube selon la revendication 9, **caractérisé en ce que** le ruban-support (2) est en métal.

11. Tube selon l'une des revendications 1 à 10, **caractérisé en ce que** le ruban-support (2) appartient au groupe constitué par une bande perforée, une bande grillagée, une tresse et un treillis.

## Claims

1. Flexible cylindrical tube for conducting air or other gases, employed in particular in the automotive industry, and comprising at least one flexible cylindrical covering (1, 3), made of a soft and noise absorbing material; and a support tape (2) with apertures (2A), tape against which the covering (1, 3) is disposed, **characterized in that** all the coverings (1, 3) are made in a material which is permeable to the gases, so as to allow the passage of gas between the tube and the outside.

2. Tube as defined in claim 1, **characterized in that** there is only one covering (1), constituting an external covering having a diameter larger than that of the tape (2).

3. Tube as defined in claim 1, **characterized in that** there is only one covering (3), constituting an internal covering having a diameter smaller than that of the tape (2).

4. Tube as defined in claim 1, **characterized in that** there is an external covering (1) having a diameter larger than that of the tape, and an internal covering (3) having a diameter smaller than that of the tape (2).

5. Tube as defined in one of claims 1 to 4, **characterized in that** the support-tape (2) and/or the covering (1, 3) are produced by helical winding.

6. Tube as defined in one of claims 1 to 5, **characterized in that** the support-tape (2) and the covering (1, 3) are adhered together.

7. Tube as defined in one of claims 1 to 6, **characterized in that** the covering (1, 3) is in a material belonging to the group comprising cloth, felt and paper.

8. Tube as defined in one of claims 1 to 7, **characterized in that** the support-tape (2) and/or the covering (1, 3) are corrugated.

9. Tube as defined in one of claims 1 to 8, **characterized in that** the support-tape (2) is made of an easy to work material.

10. Tube as defined in claim 9, **characterized in that** the support-tape (2) is made of metal.

11. Tube as defined in one of claims 1 to 10, **characterized in that** the support tape (2) belongs to the group comprising a perforated band, a band of netting, a braid and a mesh.

## Patentansprüche

1. Elastisches zylindrisches Rohr für den Transport von Luft oder anderen Gasen, das insbesondere in der Kraftfahrzeugindustrie verwendet wird und aus mindestens einer elastischen zylindrischen Verkleidung (1, 3) aus einem Material, das als weich und geräuschdämpfend angesehen wird, und einem mit Öffnungen (2A) versehenen Trägerband (2) besteht, gegen das die Verkleidung (1, 3) angelegt wird, **dadurch gekennzeichnet, dass** alle Verkleidungen (1, 3) aus einem gasdurchlässigen Material bestehen, um den Übergang des Gases zwischen Rohr und Außenumgebung zu ermöglichen.

2. Rohr nach Anspruch 1, **dadurch gekennzeichnet, dass** es eine einzige Verkleidung (1) gibt, die eine Außenverkleidung mit einem größeren Durchmesser als das Trägerband (2) bildet.

3. Rohr nach Anspruch 1, **dadurch gekennzeichnet, dass** es eine einzige Verkleidung (3) gibt, die eine Innenverkleidung mit einem geringeren Durchmesser als das Trägerband (2) bildet.

4. Rohr nach Anspruch 1, **dadurch gekennzeichnet, dass** es eine Außenverkleidung (1) mit einem größeren Durchmesser als der des Trägerbands und eine Innenverkleidung (3) mit einem geringeren Durchmesser als der des Trägerbands (2) gibt.

5. Rohr nach einem der Ansprüche 1 bis 4, **dadurch gekennzeichnet, dass** das Trägerband (2) und/oder die Verkleidung (1, 3) durch spiralförmiges Aufwickeln erhalten werden.

6. Rohr nach einem der Ansprüche 1 bis 5, **dadurch gekennzeichnet, dass** das Trägerband (2) und die Verkleidung (1, 3) miteinander verklebt sind.

7. Rohr nach einem der Ansprüche 1 bis 6, **dadurch gekennzeichnet, dass** die Verkleidung (1, 3) aus einem Material besteht, das zu der Gruppe gehört, die von Stoff, Filz und Papier gebildet wird.

8. Rohr nach einem der Ansprüche 1 bis 7, **dadurch gekennzeichnet, dass** das Trägerband (2) und/oder die Verkleidung (1, 3) gewellt sind.

9. Rohr nach einem der Ansprüche 1 bis 8, **dadurch gekennzeichnet, dass** das Trägerband (2) aus einem leicht zu bearbeitenden Material besteht.

10. Rohr nach Anspruch 9, **dadurch gekennzeichnet, dass** das Trägerband (2) aus Metall ist.

11. Rohr nach einem der Ansprüche 1 bis 10, **dadurch gekennzeichnet, dass** das Trägerband (2) zu der Gruppe gehört, die von einem Lochband, einem Gitterband, einem Flechtband und einem Geflecht gebildet wird.
